# EUROPEAN PATENT APPLICATION

(11) **EP 4 645 847 A1**
(43) Date of publication of application: **05.11.2025**
(21) Application number: 23914846.3
(22) Date of filing: 04.01.2023
(51) Int. Cl.: H04N 7/18, H04N 5/265, G09G 3/32

(54) **TRANSPARENT DISPLAY DEVICE**

(71) Applicant: LG Electronics Inc., Yeongdeungpo-gu Seoul 07336 (KR)
(72) Inventor: SEOL, Seong Woon, Seoul 06772 (KR)
(74) Representative: Schott, Jakob Valentin
(86) International application number: PCT/KR2023/000179
(87) International publication number: WO 2024/147380

(57) **Abstract**

A display device according to an embodiment of the present disclosure may comprise: a transparent display; a camera; and a controller which recognizes a predetermined object located at the rear of the transparent display by using the camera, and when the predetermined object is recognized, displays an image corresponding to the recognized object or controls the recognized object.

## Description

### [Technical Field]

The present disclosure relates to a transparent display device that recognizes an object.

### [Background Art]

Displays are evolving into new forms as technology advances. Among them, transparent display devices have the unique advantage of being able to display information as a background.

Transparent display devices display information on a transparent screen by utilizing the property of transmitting light.

As transparent display devices become more popular, they are expected to provide users with new interfaces when combined with content such as augmented reality.

However, there is a lack of specific plans to provide augmented reality using transparent displays.

### [Disclosure]

### [Technical Problem]

An object of the present disclosure is to display various images according to an object located at the rear surface of a transparent display.

An object of the present disclosure is to control an object positioned on a transparent display using a display device.

### [Technical Solution]

According to an embodiment of the present disclosure, a display device may include a transparent display;

a camera; and a controller that recognizes a preset object located at a rear surface of the transparent display using the camera, and, when the preset object is recognized, displays an image corresponding to the recognized object or controls the recognized object.

According to an embodiment of the present disclosure, the display device may obtain an area corresponding to the recognized object from the transparent display and display the image in the area corresponding to the recognized object.

According to an embodiment of the present disclosure, the display device may obtain an area where the recognized object is visible on the transparent display as an area corresponding to the recognized object.

According to an embodiment of the present disclosure, the display device may display a weather-related image as an image corresponding to the recognized object in an area corresponding to the recognized object when the recognized object is a window.

According to an embodiment of the present disclosure, the display device may display a weather-related image as an image corresponding to the recognized object in an area corresponding to the recognized object in a remaining area other than an area corresponding to the recognized object when the recognized object is a window.

According to an embodiment of the present disclosure, the display device may display a preset landscape image as the image corresponding to the recognized object when the recognized object is a window.

According to an embodiment of the present disclosure, the display device may obtain weather information from an external server when the recognized object is a window, and display a first image, which is a preset landscape image, in an area corresponding to the recognized object, and a second image, which is a weather-related image corresponding to the weather information, in a remaining area other than the area corresponding to the recognized object.

According to an embodiment of the present disclosure, the display device may display an image including at least one person or animal as the image when the recognized object is a frame.

According to an embodiment of the present disclosure, the display device may display another object of the same type as the recognized object as the image corresponding to the recognized object when the recognized object is an object set to be invisible in a front surface of the transparent display or a user input is received to make the recognized object invisible in the front surface of the transparent display.

According to an embodiment of the present disclosure, the display device may receive key information for controlling the recognized object from an external server, and control the recognized object based on the received key information, or transmit the received key information to a remote control device.

According to an embodiment of the present disclosure, the display device may obtain a control area of the transparent display for controlling the recognized object using the camera, and control the recognized object based on a user input to the control area.

According to an embodiment of the present disclosure, the display device may control an electric curtain based on the drag direction of the user input to the control input when the recognized object is the electric curtain.

According to an embodiment of the present disclosure, the display device may display at least one icon for controlling the object recognized by the image corresponding to the recognized object.

According to an embodiment of the present disclosure, the display device may display at least one icon for controlling the recognized object as the image corresponding to the recognized object when the recognized object is at least one of a door lock, a refrigerator, and an air conditioner.

According to an embodiment of the present disclosure, the display device may display a guide to indicate that the recognized object can be controlled.

### [Advantageous Effect]

A display device according to an embodiment of the present disclosure can display various images according to an object located at the rear surface of a transparent display, thereby providing a new user experience and improving the usability of the transparent display.

A display device according to an embodiment of the present disclosure can improve the convenience of a user and the usability of a transparent display by controlling an object located at the rear surface of a transparent display.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing the remote control device according to an embodiment of the present disclosure.
Fig. 5 is a view for explaining the configuration of a transparent display device according to one embodiment of the present disclosure.
Figs. 6a to 6d are views explaining various types of transparent display devices.
Fig. 7 is a view explaining a side structure of a transparent type display device of the present disclosure.
Fig. 8 is a flowchart illustrating a method for a display device according to an embodiment of the present disclosure to utilize an object positioned at the rear surface of a transparent display.
Fig. 9 is a view illustrating an example of a display device according to an embodiment of the present disclosure displaying a preset landscape image in an area corresponding to a window of a transparent display when the display device recognizes a window.
Fig. 10 is a view illustrating an example of a display device according to an embodiment of the present disclosure displaying a weather-related image in an area corresponding to a window of a transparent display when the display device recognizes a window.
Fig. 11 is a view illustrating an example of a display device according to an embodiment of the present disclosure displaying a weather-related image in a remaining area other than an area corresponding to a window of a transparent display when the display device recognizes a window.
Fig. 12 is a view illustrating an example of a display device according to an embodiment of the present disclosure displaying an image corresponding to a window in an area corresponding to a window of a transparent display and in the remaining area when the display device recognizes a window.
Fig. 13 is a view illustrating an example of a display device according to an embodiment of the present disclosure displaying an image corresponding to a frame within an area corresponding to the frame of a transparent display when the display device recognizes a frame.
Fig. 14 is a view illustrating an example of an image displayed by a display device according to an embodiment of the present disclosure when an object recognized by the display device is an object that is set to be invisible on the front surface of a transparent display.
Fig. 15 is a flowchart illustrating a method for controlling an object located at the rear surface of a transparent display by a display device according to an embodiment of the present disclosure.
Fig. 16 is a view for explaining a method for controlling an electric curtain by a display device according to one embodiment of the present disclosure.
Fig. 17 is a view for explaining a method for controlling a door lock by a display device according to one embodiment of the present disclosure.
Fig. 18 is a view for explaining a method for controlling an air conditioner by an object recognized by a display device according to an embodiment of the present disclosure.

### [Best Mode]

Hereinafter, embodiments relating to the present disclosure will be described in detail with reference to the accompanying drawings. The suffixes "interface", "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

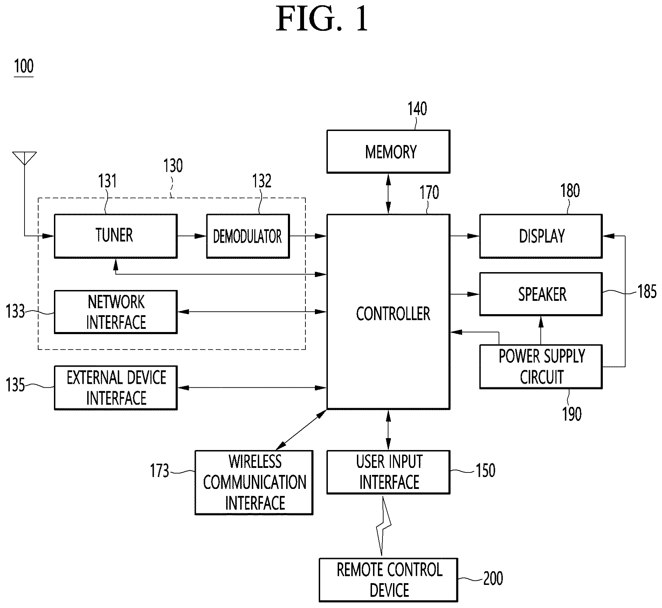

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. In other words, the network interface unit 133 may transmit or receive data to or from a corresponding server by accessing a predetermined webpage through the network.

The network interface unit 133 may receive content or data provided from a content provider or a network operator. In other words, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100.

Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

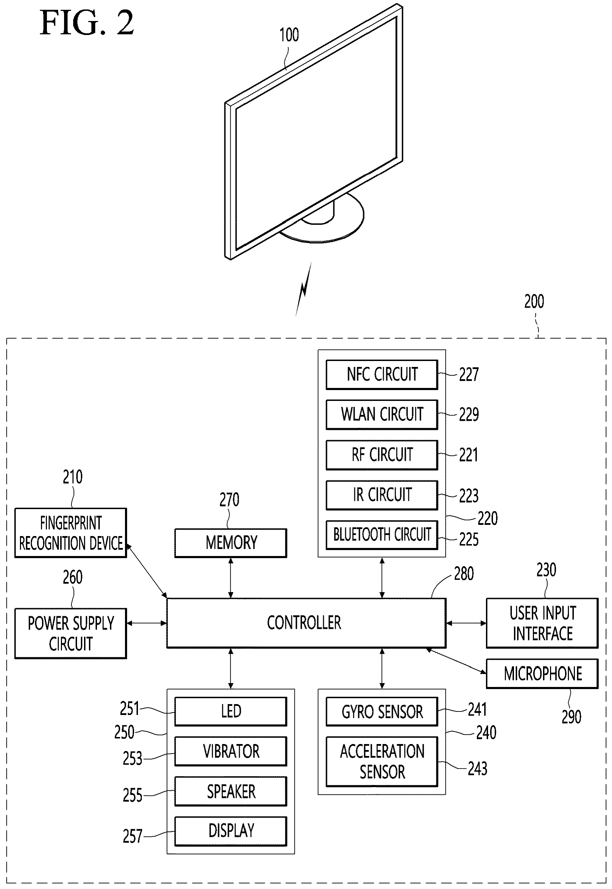

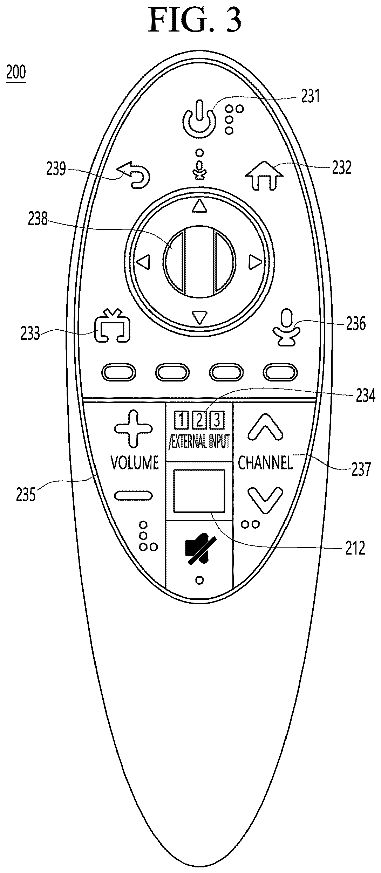

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced.

The power supply unit 260 may resume the supply of power if a predetermined key provided at the remote control device 200 is operated.

The storage unit 270 may store various kinds of programs and application data required to control or operate the remote control device 200.

If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

A plurality of sound acquisition units 290 may be provided.

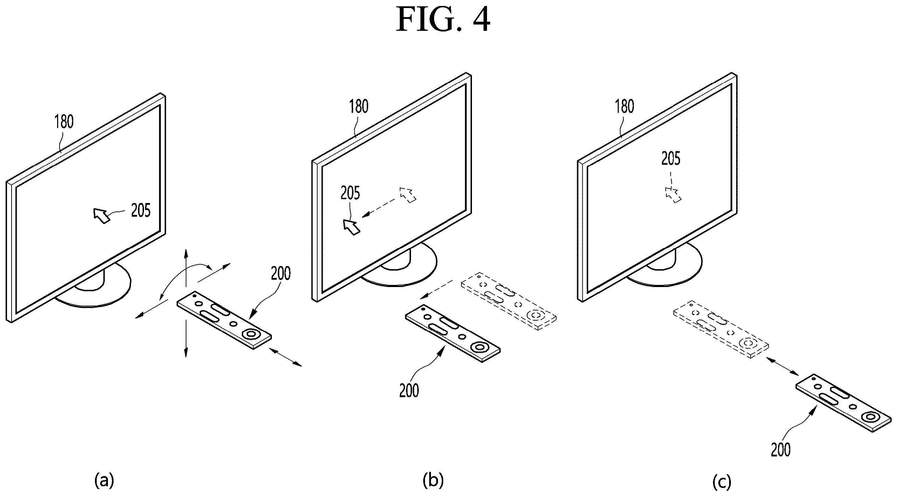

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. In other words, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

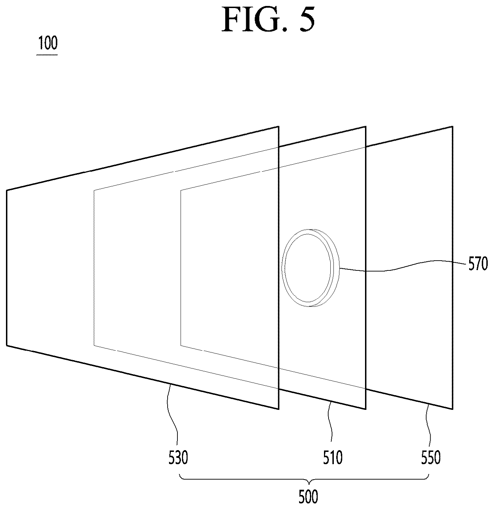

Fig. 5 is a view for explaining the configuration of a transparent display device according to one embodiment of the present disclosure.

Referring to Fig. 5, a transparent display device 100 may include a transparent display 500 and a main body 570.

The main body 570 may include a broadcast receiving part 130, an external device interface 135, a memory 140, a user input interface 150, a controller 170, a wireless communication interface 173, a speaker 185, and a power supply circuit 190 described in Fig. 1.

The transparent display 500 can perform all the functions performed by the display 180 described in Fig. 1.

A transparent display 500 may include a transparent display panel 510, a reinforced glass cover 530, and a transparent back cover 550.

The transparent display panel 510 may be either a projection display type or a transmissive display type.

Projection display type may be a type that uses technology to display images by projecting light onto a transparent screen.

A transmissive display type may be a type that uses technology to change the transmittance of the material itself, such as OLED, which emits light.

The transparent display panel 510 may include an OLED panel in which each pixel includes an organic light-emitting diode (OLED). In other words, the transparent display panel 510 may have a transmissive display type.

A tempered glass cover 530 can be attached to the front surface of the transparent display panel 510 to protect the transparent display panel 510.

The tempered glass cover 530 may be made of transparent glass to protect the transparent display panel 510 from external impact.

The transparent back cover 550 may be a cover attached to the rear surface of the transparent display panel 510.

A main body 570 may be mounted in a certain area of the transparent back cover 550. The shape of the certain area may be circular, but this is only an example, and may have a shape such as a square.

The main body 570 may be connected to a bracket for fixing the transparent display 500 to a wall.

A controller 170 provided in the main body 570 can control the transmittance of the transparent display panel 510 by applying an electric signal to the transparent display panel 510.

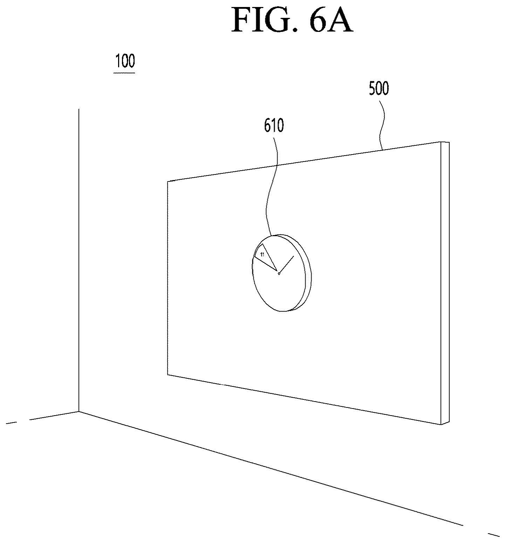

Figs. 6a to 6d are views explaining various types of transparent display devices.

Fig. 6a is an embodiment in which the main body 570 is located in the central area of the transparent display 500.

The transparent display 500 can display information on a first area 610 corresponding to the position of the main body 570.

On the first area 610, one or more of time information, weather information, and schedule information may be displayed. On the first area 610, information may be displayed by applying the AOD (Always On Display) function.

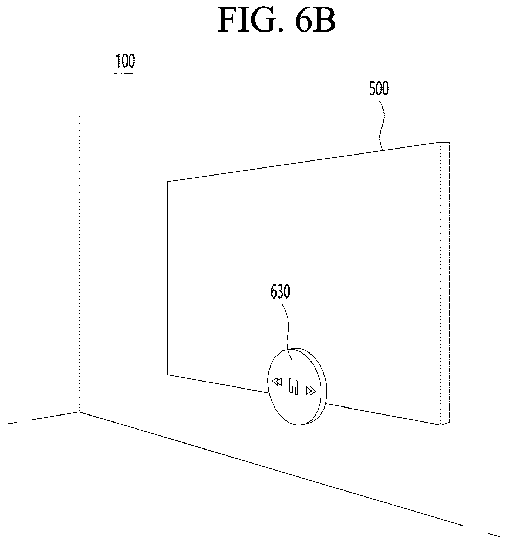

Fig. 6b is an embodiment in which the main body 570 is located in the lower area of the transparent display 500.

A part of the main body 570 may be exposed at the lower end of the transparent display 500.

The transparent display 500 can display music playback information on a second area 630 corresponding to the position of the main body 570. The main body 570 can be equipped with a speaker, and the speaker can play music.

The user can view information about the music being played through the second area 630. In addition, the user can control the playback of the music through the music playback information displayed on the second area 630 through the remote control device 200.

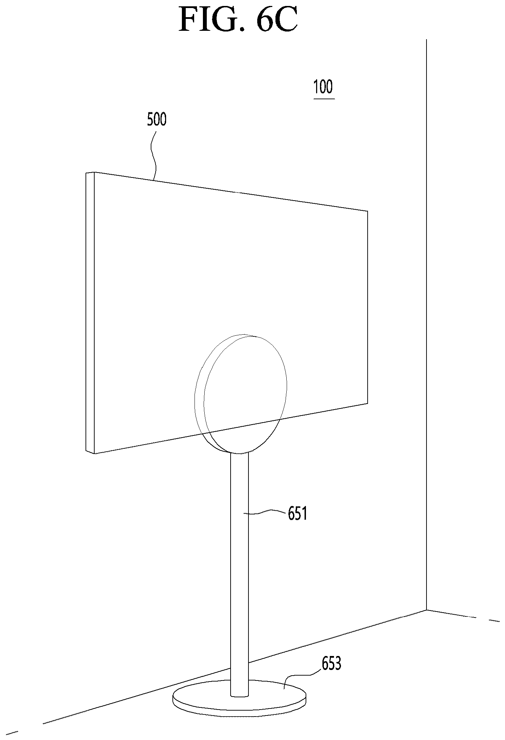

Fig. 6c is an embodiment explaining a structure in which a main body 570 is connected to a stand 651.

In Fig. 6c, the main body 570 is not fixed to the wall, but can be fixed by being connected to a stand 651. The stand 651 can be connected to a base 653 that serves as a support for the floor.

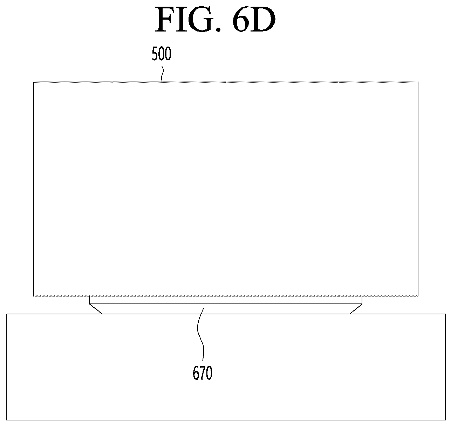

Fig. 6d shows a transparent display 500 placed on an upper surface of a living room shelf. The transparent display 500 can be positioned on the upper surface of the living room shelf via a support 670.

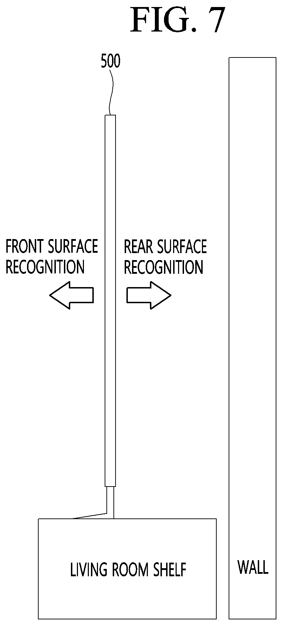

Fig. 7 is a view explaining a side structure of a transparent type display device of the present disclosure.

In Fig. 7, it is assumed that the display device 100 is placed on the upper surface of the living room shelf as described in Fig. 6d.

A camera (not shown) is placed on the transparent display 500 to recognize objects located at the front surface or the rear surface. To this end, the camera may be equipped with a front camera that detects objects at the front surface and a rear camera that detects objects at the rear surface.

An object can be either a user or an object.

A display device 100 according to one embodiment of the present disclosure seeks to provide a variety of experiences to a user by utilizing the feature that the rear surface of a transparent display 500 is visible from the front surface thereof.

Specifically, a display device 100 according to one embodiment of the present disclosure recognizes an object located at the rear surface of a transparent display 500, and displays an image corresponding to the recognized object or controls the recognized object.

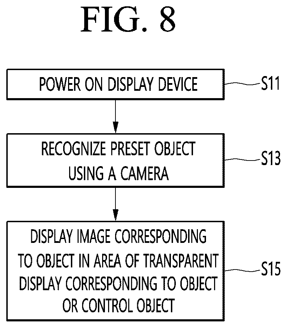

Fig. 8 is a flowchart illustrating a method for a display device according to an embodiment of the present disclosure to utilize an object positioned at the rear surface of a transparent display.

The controller 170 can recognize a preset object using a camera (S13) when the display is powered on (S11).

A preset object may be a preset object that displays a preset image corresponding to an object or may be a preset object for controlling an object. According to one embodiment, an object may be preset via a marker.

A marker may be formed on an object so that the display device 100 can recognize the object. The marker may have different physical characteristics or different patterns for each object. The marker may be formed on a specific object by a user or the like, or may be formed during the manufacturing process. In other words, the method for forming the marker on the object may vary.

The controller 170 can distinguish an object by obtaining a marker and obtaining a physical characteristic or pattern of the obtained marker. In other words, the controller 170 can recognize a preset object through a marker.

When the controller 170 recognizes an object corresponding to the obtained marker, it can display an image corresponding to the object or control the object.

In another embodiment, objects can be preset via user input.

For example, the controller 170 can display a menu including a plurality of items or a picture including the plurality of items. The controller 170 can receive a command to select at least one item from the menu or picture, and preset the selected item as an object to be recognized. The plurality of items can be various, such as a refrigerator, a window, and a door lock. The controller 170 can recognize a preset object by extracting an edge or a preset feature from an image captured by a camera (not shown).

According to another embodiment, the controller 170 can set an object through a mobile terminal (not shown). To set an object, the controller 170 can receive an image of the object from the mobile terminal (not shown) and set an object included in the received image as a recognition target in advance.

The controller 170 can capture an object located at the rear surface of the transparent display 500 using a camera to recognize a preset object. The controller 170 can obtain an object corresponding to a marker included in an image captured by the camera. In other words, the controller 170 can recognize an object using the camera.

Alternatively, the controller 170 may receive an image of the rear of the transparent display 500 from a mobile terminal (not shown) and recognize an object corresponding to a marker included in the received image. In other words, the controller 170 may recognize an object through the mobile terminal (not shown).

Meanwhile, the controller 170 may also recognize an object based on an image that does not include a marker. For example, the controller 170 may analyze an image captured by a camera or a mobile terminal (not shown) to extract an object. The controller 170 may recognize an object extracted from an image captured by a camera or a mobile terminal (not shown) as a preset object.

The controller 170 can display an image corresponding to an object in an area corresponding to the object on a transparent display 500 or control the object (S15).

When the controller 170 recognizes a preset object, the controller can obtain an area corresponding to the object on the transparent display 500 and display an image corresponding to the object in the area corresponding to the object.

The controller 170 can obtain the area where the object is visible on the transparent display 500 as the area corresponding to the object.

The controller 170 can display an image corresponding to an object in an area corresponding to the object.

The image corresponding to the object may be an image preset on the display device 100 for each preset object.

The preset image may be an image set as an image corresponding to an object during the manufacturing process of the display device 100.

Alternatively, the preset image may be an image set by user input.

The preset image may be an image stored as an image corresponding to an object in the display device 100. Alternatively, the preset image may be an image preset through camera capturing.

The preset image may be an image received from another electronic device of the user. Alternatively, the preset image may be an image received from an external server (not shown) based on a user input selecting one of the images stored in the external server (not shown).

Alternatively, the controller 170 can control the object when the controller recognizes a preset object.

At this time, objects that can be controlled by the controller 170 may include various electronic devices including door locks, air conditioners, refrigerators, or the like.

In summary, a display device 100 according to one embodiment of the present disclosure can recognize a preset object located at the rear surface of a transparent display 500 using a camera, and when the preset object is recognized, display an image corresponding to the object.

In addition, the display device 100 according to one embodiment of the present disclosure can recognize a preset object located at the rear surface of the transparent display 500 using a camera, and control the object when the preset object is recognized.

Accordingly, a display device 100 including a transparent display 500 according to one embodiment of the present disclosure can provide various user experiences utilizing objects located at the rear surface of the display, unlike a display device including an opaque display.

Next, a specific example of a display device according to an embodiment of the present disclosure displaying an image corresponding to an object on a transparent display 500 will be described.

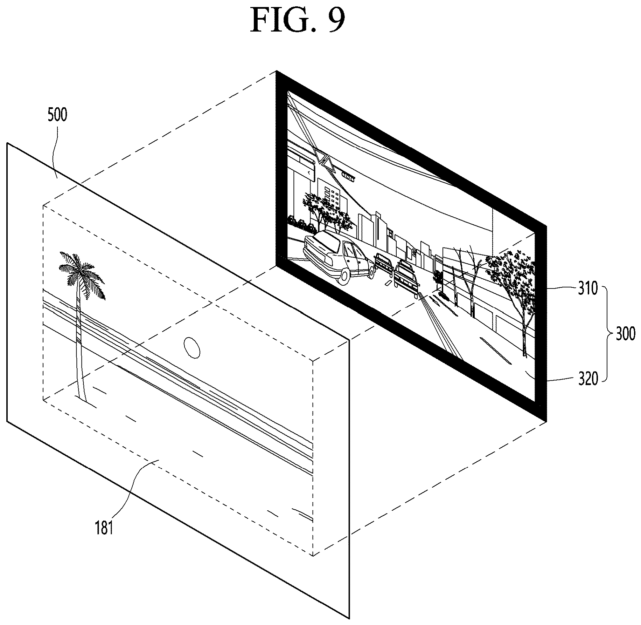

Figs. 9 to 12 are views for explaining various embodiments in which a controller 170 recognizes a window 300 as a preset object.

When the controller 170 recognizes the window 300 as a preset object, it can perform an operation according to one of the embodiments of Figs. 9 to 12 according to user input or preset.

Fig. 9 is a view illustrating an example of a display device according to an embodiment of the present disclosure displaying a preset landscape image in an area corresponding to a window of a transparent display when the display device recognizes a window.

The controller 170 can recognize the window 300 as a preset object. When the controller 170 recognizes the window 300, the controller can display an image corresponding to the window 300.

The image corresponding to the window 300 may be a preset landscape image.

The preset landscape image may be an image set as an image corresponding to a window 300 during the manufacturing process of the display device 100.

Alternatively, the preset landscape image may be an image set as an image corresponding to the window 300 by user input.

The preset landscape images can be images of various landscapes such as the sea, mountains, and forests.

Referring to Fig. 9, the landscape seen through the window 300 is a city landscape, and the image displayed on the transparent display 500 is an image of the sea.

When the controller 170 recognizes the window 300, the controller can display a preset landscape image. When the controller 170 recognizes the window 300, the controller can display an image of the sea as a preset landscape image.

Meanwhile, the area 181 corresponding to the object may vary. In other words, when the controller 170 recognizes the window 300 as an object, the area 181 corresponding to the window 300 may vary.

A method for obtaining an area 181 corresponding to an object when a controller 170 recognizes a window 300 as a preset object is described.

According to the first embodiment, the controller 170 can set the area 181 corresponding to the object as an area where the object is visible on the transparent display 500.

For example, the controller 170 can obtain the area where the window 300 is visible on the transparent display 500 as the area 181 corresponding to the object.

A window 300 may include a window frame 310 and a window 320 having window glass mounted thereon.

The area where the window 300 is visible on the transparent display 500 may be an area within the outer outline of the window frame 310.

The controller 170 can obtain the area within the outer outline of the window frame 310 visible on the transparent display 500 as the area 181 corresponding to the object.

Accordingly, the controller 170 can display a preset landscape image in an area within the outer outline of the window frame 310 that is visible on the transparent display 500. In other words, the controller 170 can display a preset landscape image up to an area corresponding to the window frame 310 of the transparent display 500.

Accordingly, a preset landscape image is displayed up to an area corresponding to the window frame 310, so that the landscape image can be viewed over a wider area than when the preset landscape image is displayed in an area corresponding to the window 320.

According to the second embodiment, when the window 300 is recognized as an object, the controller 170 can obtain an area within the inner outline of the window frame 310 visible on the transparent display 500 as an area 181 corresponding to the object.

Accordingly, the controller 170 can display a preset landscape image in an area within the inner outline of the window frame 310 visible on the transparent display 500.

Since the actual landscape can be seen through the window 320, the controller 170 can obtain the area 181 corresponding to the object as an area within the outline of the window 320, and display an image corresponding to the object in the same area as the area where the actual landscape is visible.

Accordingly, there is an advantage in that the preset image displayed by the controller 170 can appear realistic.

According to the third embodiment, the controller 170 can obtain an area 181 corresponding to an object that is larger than the outer outline of the window frame 310 shown on the transparent display 500 by a preset length.

For example, the area 181 corresponding to the object may be an area having a length that is 3 cm wider and 3 cm longer than the window frame 310. However, this is merely an example, and the area 181 corresponding to the object may be set within a preset range.

Accordingly, the controller 170 can display a preset landscape image in an area wider than the area corresponding to the window 300.

When displaying a preset landscape image in an area wider than the area corresponding to the window 300, even if there is an error in the area corresponding to the window 300 obtained by the controller 170, the preset landscape image can be displayed so as to include the area corresponding to the window 300.

Accordingly, the problem of the window frame 310 being visible outside the area 181 corresponding to the object is minimized, thereby allowing the user to immerse themselves in the landscape image.

To summarize Fig. 9, when the controller 170 recognizes the window 300 as a preset object, it can display a preset landscape image in an area 181 corresponding to the window 300.

Accordingly, the front surface of the transparent display 500 can have a visual effect in which the landscape of the preset landscape image appears to be an actual landscape seen through the window 300.

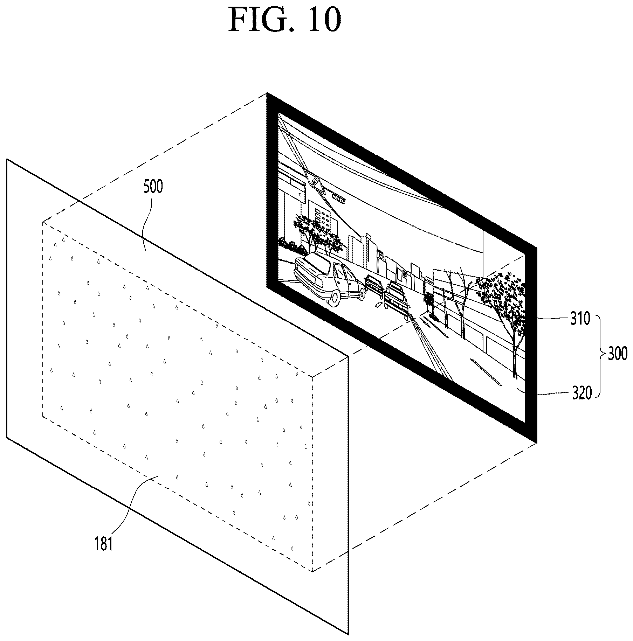

Fig. 10 is a view illustrating an example of a display device according to an embodiment of the present disclosure displaying a weather-related image in an area corresponding to a window of a transparent display when the display device recognizes a window.

The controller 170 can recognize the window 300 as a preset object. When the controller 170 recognizes the window 300, the controller can display an image corresponding to the window 300.

The image corresponding to the window 300 may be a weather-related image.

The weather-related image may be an image set to correspond to a window 300 during the manufacturing process of the display device 100.

Alternatively, the weather-related image may be an image set as the image corresponding to the window 300 by user input.

Weather-related images can be images of various types of weather, such as rain, snow, fog, and clouds.

Referring to Fig. 10, the weather seen through the window 310 is clear weather, and the image displayed on the transparent display 500 is a rainy image.

If the controller 170 recognizes the window 300 as an object, the controller can display a weather-related image. If the controller 170 recognizes the window 300 as an object, the controller can display a rain image as a weather-related image.

To summarize Fig. 10, if the controller 170 recognizes a window 300 as a preset object, the controller can display a weather-related image in an area 181 corresponding to the window 300.

Accordingly, the weather-related image on the front surface of the transparent display 500 can have a visual effect that makes it look like the actual weather seen through the window 300.

Meanwhile, if the controller 170 recognizes the window 300 as a preset object, the weather-related image displayed in the area 181 corresponding to the object may include astronomical images.

The astronomical images may include images of celestial bodies such as the sun, moon, stars, constellations, the Milky Way, and aurora.

For example, an astronomical image may include an image of the sun setting in the west. The controller 170 may display an image of the sun setting in the west to provide a visual effect similar to a sunset even at times other than the evening.

Meanwhile, the controller 170 can display an image corresponding to the object in the remaining area other than the area corresponding to the object.

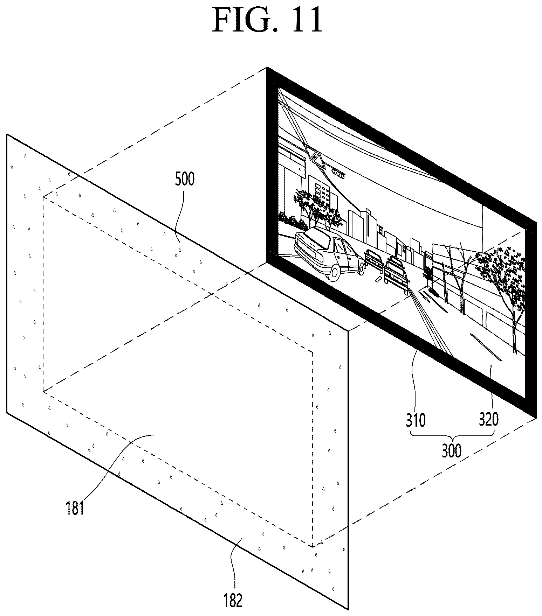

Fig. 11 is a view illustrating an example of a display device according to an embodiment of the present disclosure displaying a weather-related image in a remaining area other than an area corresponding to a window of a transparent display when the display device recognizes a window.

The controller 170 can recognize the window 300 as a preset object. When the controller 170 recognizes the window 300, the controller can display an image corresponding to the window 300.

The image corresponding to the window 300 may be a weather-related image.

The controller 170 can display an image corresponding to an object in the remaining area 182, which is an area other than the area corresponding to the object.

When the controller 170 recognizes the window 300, the controller can display a weather-related image in the remaining area 182. The remaining area 182 may be an area where the background of the location where the object is located is visible.

Referring to Fig. 11, the landscape seen through the window 300 is a city landscape, and the image displayed on the transparent display 500 is a non-image.

The controller 170 can display weather-related images in the remaining area 182. The area where the rain images are displayed can be the remaining area 182.

Meanwhile, the controller 170 can display different images in the area corresponding to the object and the remaining area respectively.

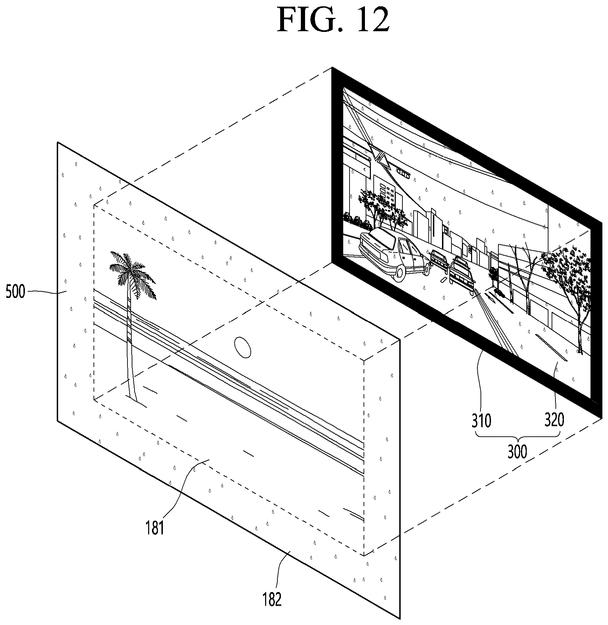

In relation to this, it is specifically explained with reference to Fig. 12.

Fig. 12 is a view illustrating an example of a display device according to an embodiment of the present disclosure displaying an image corresponding to a window in an area corresponding to a window of a transparent display and in the remaining area when the display device recognizes a window.

The controller 170 can recognize the window 300 as a preset object. When the controller 170 recognizes the window 300, the controller can display an image corresponding to the window 300.

The image corresponding to the window 300 may be a preset landscape image and a weather-related image.

The controller 170 can display an image corresponding to an object in an area corresponding to the object 181 and the remaining area 182.

The controller 170 can display a first image, which is a preset landscape image, in an area 181 corresponding to an object. In addition, the controller 170 can display a second image, which is a weather-related image, in the remaining area 182.

The second image can be a weather-related video corresponding to real weather.

The controller 170 can obtain weather information from an external server (not shown). The weather information can include information related to actual weather, such as snow or rain. The controller 170 can display a weather-related image corresponding to actual weather as a second image based on the obtained weather information.

Referring to Fig. 12, the landscape seen through the window 310 is a city landscape with rain falling.

In addition, an image of the sea is displayed as a first image in an area 181 corresponding to an object in the window 300 of the transparent display 500, and a non-image is displayed as a second image in an area 182 that is not corresponding to an object.

The controller 170 can obtain weather information and display a rain image as a second image in the remaining area 182 based on the obtained weather information.

In summary, when a display device 100 according to an embodiment of the present disclosure recognizes a window 300 as a preset object, the display device can obtain weather information from an external server (not shown) and display a first image, which is a preset landscape image, in an area 181 corresponding to the object. In addition, the controller 170 can display a second image, which is a weather-related image corresponding to the weather information, in a remaining area 182 other than the area corresponding to the object.

When the controller 170 displays the first image in the area 181 corresponding to the window 300, it is difficult for the user to know the actual weather. Accordingly, the controller 170 can display a weather-related image corresponding to the actual weather in the remaining area 182 so that the user can know the actual weather.

A display device 100 according to one embodiment of the present disclosure has an advantage in that a user can understand actual weather while viewing a preset landscape image.

Next, a method for displaying an image corresponding to an object on a transparent display 500 when the controller 170 recognizes a frame as a preset object will be described.

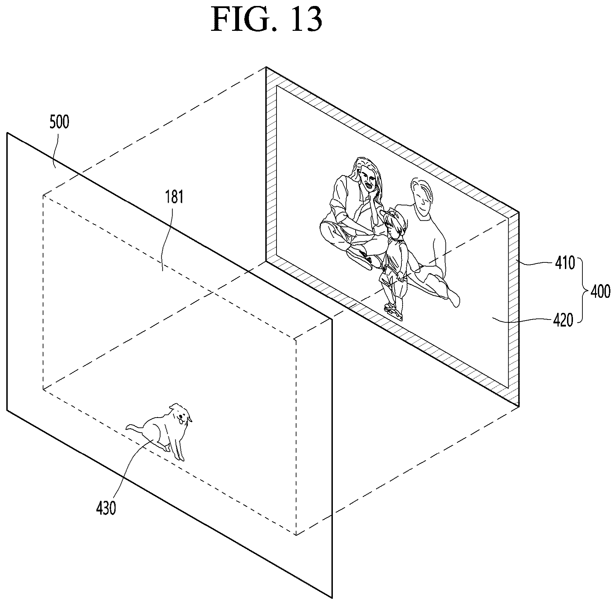

Fig. 13 is a view illustrating an example of a display device according to an embodiment of the present disclosure displaying an image corresponding to a frame within an area corresponding to the frame of a transparent display when the display device recognizes a frame.

The controller 170 can recognize the frame 400 as a preset object. When the controller 170 recognizes the frame 400, the controller can display an image corresponding to the frame 400.

The image corresponding to the frame 400 may be an image including at least one person or animal.

An image including at least one person or animal may be an image set as an image corresponding to a frame 400 during the manufacturing process of the display device 100.

Alternatively, the image including at least one person or animal may be an image set as an image corresponding to the frame 400 by user input.

The image containing at least one person or animal may be an image containing multiple people or animals, such as family members or a dog.

Referring to Fig. 13, a frame 400 with a family photo 420 is positioned on the rear surface of a transparent display 500. In addition, an image including a puppy 430 is displayed on the transparent display 500.

When the controller 170 recognizes the frame 400 as an object, the controller can display an image including at least one person or animal on the transparent display 500. When the controller 170 recognizes the frame 400 as an object, the controller can display an image including a puppy 430 on the transparent display 500.

Meanwhile, the area 181 corresponding to the object may vary. In other words, when the controller 170 recognizes the frame 400 as an object, the area 181 corresponding to the frame 400 may vary.

A method for obtaining an area 181 corresponding to an object when the controller 170 recognizes a frame 400 as a preset object is described.

According to the first embodiment, the controller 170 can set the area 181 corresponding to the object as an area where the object is visible on the transparent display 500.

For example, the controller 170 can obtain the area where the frame 400 is visible on the transparent display 500 as the area 181 corresponding to the object.

The frame 400 may include a frame outline 410 and a photo 420 mounted on the frame outline 410.

The area where the frame 400 is visible on the transparent display 500 may be an area within the outer outline of the frame outline 410.

The controller 170 can obtain the area within the outer outline of the frame outline 410 visible on the transparent display 500 as the area 181 corresponding to the object.

The controller 170 can display an image including at least one person or animal in an area within the outer outline of a frame outline 410 visible on the transparent display 500.

According to the second embodiment, when the frame 400 is recognized as an object, the controller 170 can obtain an area within the inner outline of the frame outline 410 visible on the transparent display 500 as an area 181 corresponding to the object.

Accordingly, the controller 170 can display an image including at least one person or animal in an area within the inner outline of the frame outline 410 visible on the transparent display 500.

According to the third embodiment, the controller 170 can obtain an area 181 corresponding to the object that is larger than the outer outline of the frame outline 410 visible on the transparent display 500 by a preset length.

For example, the area 181 corresponding to the object may be an area having a length that is 1 cm wider and 1 cm longer than the frame outline 410. However, this is merely an example, and the area 181 corresponding to the object may be set within a preset range.

In summary, when the display device 100 according to one embodiment of the present disclosure recognizes a frame 400 as a preset object, the display device can display an image including at least one person or animal as an image corresponding to the object. In this case, there is an effect in which the image corresponding to the object is overlapped and displayed on the frame 400. The person or animal included in the image corresponding to the object may be stationary or may move.

This can have the visual effect of making it appear as if the photo was taken with a person or animal that was not present in the photo.

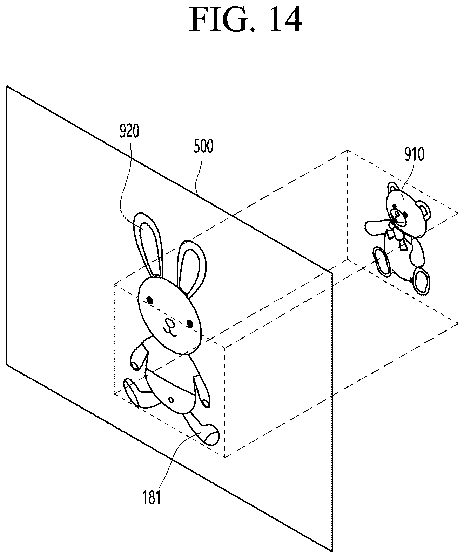

Fig. 14 is a view illustrating an example of an image displayed by a display device according to an embodiment of the present disclosure when an object recognized by the display device is an object that is set to be invisible on the front surface of a transparent display.

The controller 170 can recognize the teddy bear 910 as a preset object.

When the controller 170 recognizes a teddy bear 910, the controller can display an image corresponding to the teddy bear 910.

The teddy bear 910 may be an object that is set to be invisible on the front surface of the transparent display 500.

If the controller 170 recognizes a teddy bear 910 as a preset object, the controller can display an image corresponding to the teddy bear 910.

The image corresponding to the teddy bear 910 may be a substitute image. The substitute image may be an image including another object of the same type as the object recognized by the controller 170. The teddy bear 910 may be a doll type. Other objects of the doll type may include various dolls such as a rabbit doll 920 and a lion doll.

The alternative image may be an image set to correspond to a teddy bear 910 during the manufacturing process of the display device 100.

Alternatively, the alternative image may be an image set to correspond to the teddy bear 910 by user input.

The alternative image may vary according to the type of object recognized by the controller 170. For example, the controller 170 may recognize a wooden table as a preset object. A wooden table may be a type of table. An image corresponding to a wooden table may include an iron table, which is another object of the type of table. If the controller 170 recognizes a wooden table as a preset object, the controller may display an image including an iron table.

Referring to Fig. 14, a teddy bear 910 may be positioned on the rear surface of a transparent display 500. Additionally, an image including a rabbit doll 920 may be displayed on the transparent display 500.

The controller 170 can display an alternative image when it recognizes a teddy bear 910.

The rabbit doll 920 may be an image corresponding to the teddy bear 910.

When the controller 170 recognizes a teddy bear 190 as an object, the controller can display an image including a rabbit doll 920, which is another object of the same type as the teddy bear 910.

The size of the alternative image may be equal to or larger than the size of the area 181 corresponding to the object. For example, the size of the alternative image including the rabbit doll 920 may be equal to or larger than the size of the area 181 corresponding to the teddy bear 910.

Accordingly, an object included in the alternative image may have the effect of completely obscuring an object recognized by the controller 170.

Meanwhile, the controller 170 can display an alternative image corresponding to the object even when the controller receives a user input to make the object invisible in front surface of the transparent display 500.

In summary, if the object is set to be invisible from the front surface of the transparent display 500, the controller 170 can display another object of the same type as the object as an image corresponding to the object. Alternatively, if the controller 170 receives a user input for making the object invisible from the front surface of the transparent display 500, the controller 170 can display another object of the same type as the object as an image corresponding to the object.

Accordingly, the interior design of the rear surface of the transparent display 500 can have a visual effect that appears as an interior design desired by the user.

Meanwhile, due to the characteristics of the transparent display 500 that transmits light, an alternative image can be displayed with transparency.

When the alternative image is displayed with transparency, the alternative image and an object located behind the transparent display 500 may appear to overlap.

The display device 100 may further include a shade film to prevent the alternative image and object from overlapping. The shade film may be a device for blocking light from the rear surface of the transparent display 500.

A shade film may be provided inside the main body 570 of the display device 100. If the object is set to be invisible from the front surface of the transparent display 500, the shade film may be drawn out from the main body 570 and block light from the rear surface of the area 181 corresponding to the object.

Next, a method for controlling an object by a display device 100 according to one embodiment of the present disclosure is described.

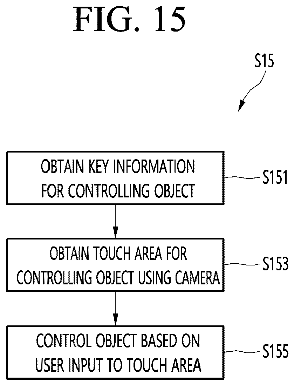

Fig. 15 is a flowchart illustrating a method for controlling an object located at the rear surface of a transparent display by a display device according to an embodiment of the present disclosure.

Fig. 15 is a view specifically explaining how the controller 170 of step S15 of Fig. 5 controls an object.

The controller 170 can obtain key information for controlling an object (S151).

Key information may include a key code for controlling an external device. Key information may correspond to an object. Key codes may correspond to operations performed by the object. In other words, key codes may vary according to the operation of the object.

The controller 170 can capture an object using a camera. When the controller 170 recognizes a preset object, the controller can receive key information corresponding to the object from an external server (not shown) or memory 140. The controller 170 can control the object using the received key information.

Meanwhile, the display device 100 according to one embodiment of the present disclosure can directly control a preset object using the obtained key information, or can control the preset object through a remote control device 200. For example, the controller 170 can transmit the key information to the remote control device 200. The remote control device 200 that receives the key information can control the object.

The controller 170 can obtain a control area for controlling an object using a camera (S153).

The controller 170 can use a camera to capture an area containing an object or buttons for controlling the object.

The controller 170 can obtain a control area for controlling an object based on an image obtained by capturing the object.

For example, the controller 170 can obtain an area corresponding to an object on a transparent display 500 based on an image obtained by capturing the object. Then, the controller 170 can obtain an area corresponding to the object as a control area for controlling the object.

Alternatively, the controller 170 can obtain a control area for controlling the object based on an image obtained by capturing the panel.

For example, the controller 170 can obtain an area corresponding to an area including a button for controlling an object on a transparent display 500 based on an image obtained by capturing the panel. Then, the controller 170 can obtain an area corresponding to an area including a button for controlling an object as a control area for controlling the object.

The controller 170 can control an object based on user input to the control area (S155).

The controller 170 can control objects based on user input to the control area.

User input to the control area may be touch input or input using a remote control device 200.

The controller 170 can receive touch input for the control area and control an object based on the received touch input.

Alternatively, the controller 170 may receive an input using a remote control device 200 for the control area and control the object based on the input received using the remote control device 200.

In summary, a display device 100 according to one embodiment of the present disclosure can recognize an object located at the rear surface of a transparent display 500 and control the object.

Next, a method for controlling an electric curtain when a display device according to an embodiment of the present disclosure recognizes the electric curtain as a preset object is described.

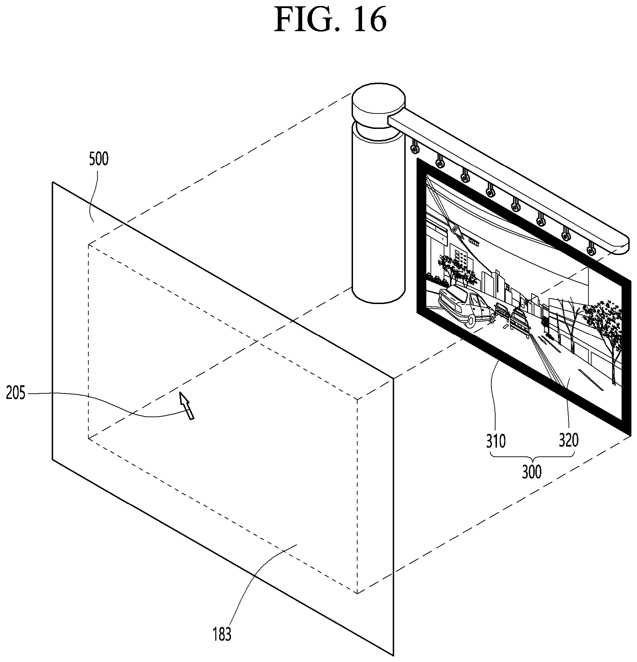

Fig. 16 is a view for explaining a method for controlling an electric curtain by a display device according to one embodiment of the present disclosure.

When the controller 170 recognizes the electric curtain 600 as a preset object, the controller can obtain key information for controlling the electric curtain 600 from an external server (not shown) or memory 140. The key information for controlling the electric curtain 600 can include a key code corresponding to an operation of opening or closing the electric curtain 600.

However, this is only an example, and the key information for controlling the electric curtain 600 may include key codes corresponding to various operations of the electric curtain 600.

Referring to Fig. 16, an electric curtain 600 is installed in a window 310 located at the rear surface of a transparent display 500. In other words, the electric curtain 600 is located at the rear surface of the transparent display 500.

The controller 170 can obtain a control area for controlling the electric curtain 600.

For example, the controller 170 can obtain an area having the horizontal and vertical lengths of the electric curtain 600 visible on the transparent display 500 as a control area 183.

The controller 170 can control the electric curtain 600 based on user input to the control area 183.

User input to the control area 183 may be touch input.

For example, user input to the control area 183 may be a touch input dragging from left to right within the control area 183.

When the controller 170 receives a touch input dragging from left to right within the control area 183 when the electric curtain 600 is opened to the left, the controller can transmit a signal to the electric curtain 600 to close the electric curtain 600 to the right.

Alternatively, the controller 170 may transmit a signal to the electric curtain 600 to open the electric curtain 600 to the left when receiving an input to drag the control area from right to left when the electric curtain 600 is closed.

In other words, the controller 170 can control the electric curtain 600 based on the drag direction of the touch input.

Additionally, the controller 170 can control the electric curtain 600 to open or close the curtain by the dragged length.

For example, the controller 170 can control the electric curtain 600 to close longer as the drag length of the touch input becomes longer.

Meanwhile, user input to the control area 183 may be input using a remote control device 200.

For example, input using a remote control device 200 may be an input of moving the pointer 205 from the left to the right of the control area 183 while pressing the confirmation button 238 of the remote control device 200.

When the controller 170 receives an input of moving the pointer 205 from the left to the right of the control area 183 while pressing the confirmation button 238 of the remote control device 200 when the electric curtain 600 is closed, the controller can transmit a signal to the electric curtain 600 to open the electric curtain 600 to the right.

In summary, a display device 100 according to one embodiment of the present disclosure can obtain a control area 183 of a transparent display 500 for controlling an object, and control the object based on a user input to the control area 183.

Accordingly, the user has the advantage of being able to easily control an object located at the rear of the display device 100 without having to move to the rear surface of the display device 100 to control the object.

Next, a method for controlling a door lock when a display device according to an embodiment of the present disclosure recognizes a door lock as a preset object is described.

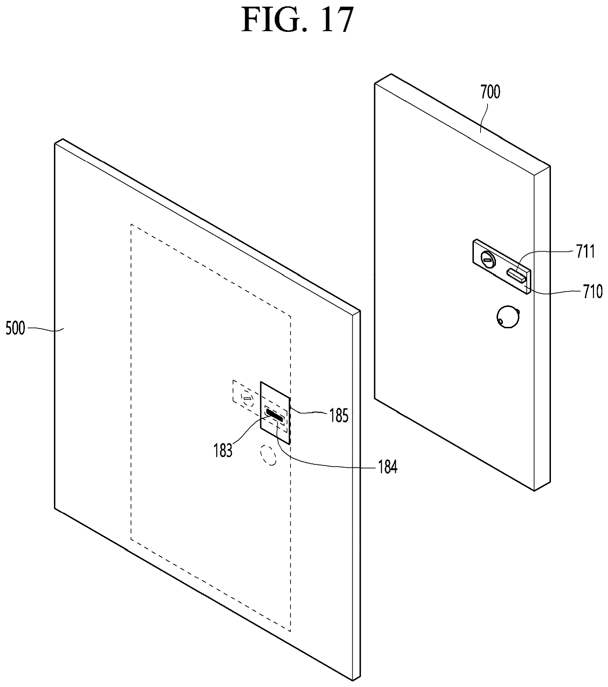

Fig. 17 is a view for explaining a method for controlling a door lock by a display device according to one embodiment of the present disclosure.

When the controller 170 recognizes the door lock 710 as a preset object, the controller can obtain key information for controlling the door lock 710 from an external server (not shown) or memory 140. The key information for controlling the door lock 710 can include a key code corresponding to an operation of locking or unlocking the door lock 710.

However, this is only an example, and the key information for controlling the door lock 710 may include key codes corresponding to various operations of the door lock 710.

Referring to Fig. 17, a front door 700 may be located at the rear surface of a transparent display 500. A door lock 710 may be installed at the front door 700. In other words, a door lock 710 is located at the rear surface of a transparent display 500.

The controller 170 can obtain a control area 183 for controlling the door lock 710.

For example, the controller 170 can obtain an area corresponding to an open/close button 711 included in a door lock 180 that is visible on a transparent display 500 as a control area 183. The open/close button 711 may be a button for locking or unlocking the door lock 710.

The controller 170 can control the door lock 710 based on user input for the obtained control area 183.

User input to the control area 183 may be touch input.

For example, a user input to the control area 183 may be an input of tapping a point within the control area 183. When the door lock 710 is locked, the controller 170 may transmit a signal to unlock the door lock 710 upon receiving an input of tapping a point within the control area 183.

Alternatively, the controller 170 may transmit a signal to the door lock 710 to lock the door lock 710 when receiving an input of tapping any point within the control area 183 when the door lock 710 is unlocked.

Meanwhile, the user input for the control area 183 may be an input using a remote control device 200. For example, the input using the remote control device 200 may be an input of pressing the confirmation button 238 of the remote control device 200 while the pointer 205 is positioned at a point within the control area 183.

When the controller 170 receives an input of pressing the confirmation button 238 of the remote control device 200 while the pointer 205 is positioned at a point within the control area 183 when the door lock 710 is locked, the controller can transmit a signal to unlock the door lock 710.

In summary, a display device 100 according to one embodiment of the present disclosure obtains a control area 183 corresponding to a button for controlling an object, and can control the object based on a user input to the control area 183.

Accordingly, the user has the advantage of being able to easily control an object located at the rear surface of the display device 100 without having to move to the rear surface of the display device 100 to control the object.

Meanwhile, the controller 170 may display an icon 184 corresponding to the open/close button 711. The area where the icon 184 is displayed may be a control area 183. The icon 184 may be displayed in the area 183 corresponding to the open/close button with the same shape as the open/close button 711. However, the shape of the icon 184 is not limited to the same shape as the open/close button 711 and may vary.

The controller 170 may display a guide 185 to inform that the object can be controlled by user input for the icon 184 together with the icon 184.

The controller 170 can display an icon 184 in an area 183 corresponding to the open/close button when the doorbell (not shown) rings.

Accordingly, the display device 100 according to one embodiment of the present disclosure can notify the user that the door lock 710 can be unlocked when the doorbell (not shown) rings. In addition, when the doorbell (not shown) does not ring, the icon 184 is not displayed, thereby avoiding unnecessarily drawing the user's attention.

To this end, the controller 170 can obtain whether the doorbell (not shown) is ringing. For example, the controller 170 can obtain that the doorbell (not shown) is ringing when the controller receives a sound input of a doorbell (not shown) ringing from the microphone 290. The doorbell (not shown) sound can be a doorbell sound pre-stored in the display device 100. The controller 170 can obtain that the doorbell (not shown) is ringing when the controller obtains a sound that is identical to the pre-stored doorbell sound. Alternatively, the controller 170 can obtain that the doorbell (not shown) is ringing when the size of the obtained sound is equal to or greater than a preset decibel size.

Meanwhile, the size of the control area 183 obtained as the area corresponding to the open/close button 711 may vary according to the distance between the front door 700 and the display device 100.

As the distance between the front door 700 and the display device 100 increases, the size of the control area 183 obtained as the area corresponding to the open/close button 711 may become smaller. As the size of the control area 183 becomes smaller, it may be less noticeable to the user or difficult for the user to input a touch.

Accordingly, the controller 170 can display an icon 184 corresponding to the open/close button 711 in a preset size. The preset size can be set to a size that makes it easy for the user to see the icon 184 corresponding to the open/close button 711 or to make it easy to input touch.

Accordingly, the display device 100 according to one embodiment of the present disclosure displays an icon 184 corresponding to the open/close button 711 in a preset size, thereby allowing the user to easily lock or unlock the door lock 710.

Next, a method for controlling an air conditioner when a display device according to an embodiment of the present disclosure recognizes an air conditioner as a preset object will be described.

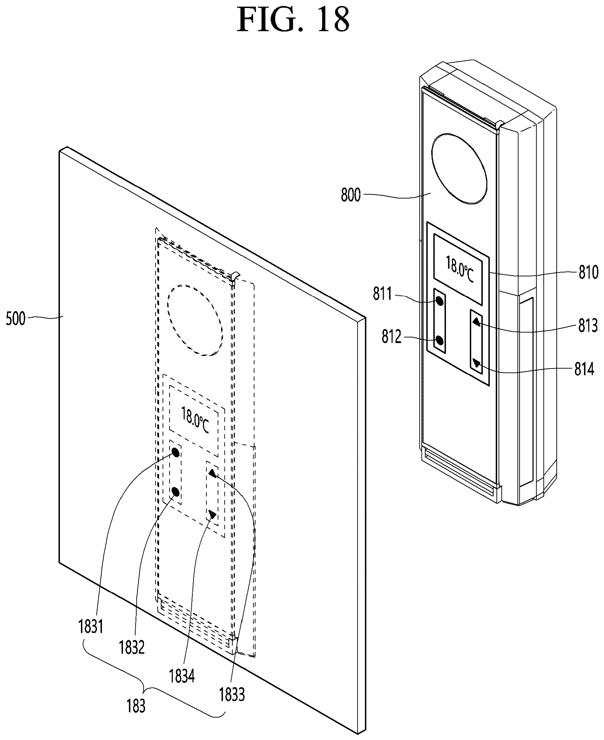

Fig. 18 is a view for explaining a method for controlling an air conditioner by an object recognized by a display device according to an embodiment of the present disclosure.

When the controller 170 recognizes the air conditioner 800 as a preset object, the controller can obtain key information for controlling the air conditioner 800 from an external server (not shown) or memory 140. The key information for controlling the air conditioner 800 can include key codes corresponding to an operation of turning the air conditioner 800 on or off and an operation of raising or lowering the target temperature.

However, this is only an example, and key information for controlling the air conditioner 800 may include key codes corresponding to various operations of the air conditioner 800.

Referring to Fig. 18, an air conditioner 800 is positioned at the rear of a transparent display 500. The air conditioner 800 may include an area 810 including a button for controlling the air conditioner.

The air conditioner 800 may include an area 810 including buttons for controlling the air conditioner. The buttons for controlling the air conditioner may include a power button 811, a wind volume button 812, a target temperature increase button 813, and a target temperature decrease button 814. However, this is merely an example, and the buttons included in the area 810 including buttons for controlling the air conditioner may vary according to the operations that the air conditioner 800 can perform.

The controller 170 can obtain a control area 183 for controlling the air conditioner 800.

The controller 170 can obtain an area corresponding to a button for controlling the air conditioner as a control area 183.

For example, the controller 170 can obtain an area where a power button 811, a wind volume button 812, a target temperature increase button 813, and a target temperature decrease button 814 are visible on a transparent display 500 as a control area 183.

In other words, the controller 170 can obtain an area 1831 corresponding to the power button, an area 1832 corresponding to the wind volume button, an area 1833 corresponding to the target temperature increase button, and an area 1834 corresponding to the target temperature decrease button as the control area 183.

The controller 170 can control the air conditioner 800 based on user input to the control area 183.

User input to the control area 183 may be touch input.

For example, a user input for the control area 183 may be an input touching one area of the control area 183. When the controller 170 receives one input touching an area 1833 corresponding to the target temperature increase button, the controller may transmit a signal to increase the target temperature by 1°C.

Meanwhile, the user input for the control area 183 may be an input using a remote control device 200. For example, the input using the remote control device 200 may be an input of pressing the confirmation button 238 of the remote control device 200 while the pointer 205 is positioned within one area of the control area 183.

The controller 170 can transmit a signal to turn on the power of the air conditioner 800 when the controller receives an input of pressing the remote control device 238 while the pointer 205 is positioned in the area 1831 corresponding to the power button when the air conditioner 800 is turned off.

Meanwhile, as illustrated, the control area 183 may include a plurality of control areas corresponding to a plurality of buttons included in the panel 810 for controlling the object. Accordingly, if an error occurs in the control area obtained by the controller 170, it may be obtained that there is a user input for a button other than the button intended by the user.

Accordingly, a display device according to an embodiment of the present disclosure seeks to correct the position of a control area 183 corresponding to a plurality of buttons included in an area 810 including buttons for controlling an object.

First, the controller 170 can capture an area 810 including buttons for controlling an object using a camera. The controller 170 can obtain position information of each of the plurality of buttons for controlling the object from the image captured of the area 810 including buttons for controlling the object. The position information of each of the plurality of buttons can include coordinates of each of the plurality of buttons within the area 810 including buttons for controlling the object.

Additionally, the controller 170 can receive position information of each of a plurality of buttons included in an area 810 including buttons for controlling an object from an external server (not shown).

The controller can calculate correction coordinates of each of the plurality of buttons based on position information of each of the plurality of buttons obtained from an image captured of an area 810 including buttons for controlling an object and position information of each of the plurality of buttons received from an external server (not shown).

For example, the controller 170 can calculate correction coordinates by averaging the coordinates of each of a plurality of buttons obtained from an image captured of an area 810 including buttons for controlling an object and each of a plurality of buttons received from an external server (not shown).

The controller 170 can correct the position of the control area 183 corresponding to each of the plurality of buttons based on the calculated correction coordinates.

Meanwhile, the controller 170 may also modify the correction coordinates based on user input that modifies the calculated correction coordinates.

Accordingly, there is an advantage in that the accuracy of the position of the control area 183 corresponding to each of the plurality of buttons is improved. Accordingly, malfunction of the object due to an error in the obtained control area 183 can be reduced.

When the controller 170 recognizes various electronic devices, including a door lock, a refrigerator, an air conditioner, a washing machine, or the like, as objects, the controller can display at least one icon for controlling the objects.

For example, if the controller 170 recognizes a refrigerator 800 as a preset object, it can display an image corresponding to the refrigerator 800. The image corresponding to the refrigerator 800 can include an image of an area 810 including a button for controlling the refrigerator. The controller 170 can display a button for controlling the refrigerator 800 as an icon for controlling the refrigerator 800. In other words, if the controller 170 recognizes a refrigerator 800, the controller can display at least one icon for controlling the refrigerator 800.

Meanwhile, the controller 170 can adjust the size of the control area 183 based on user input for the area where the control area 183 is displayed.

For example, when the controller 170 receives a touch input of simultaneously dragging two fingers outward within an area where a control area 183 is displayed, the controller 170 can enlarge and display an image of the control area 183.

Accordingly, when a user wishes to control an electronic device recognized as an object, the controller 170 can display an enlarged image of the control area 183 to show the icons included in the control area 183 in detail.

Meanwhile, the controller 170 can display a reduced image of the control area 183 when the controller receives a touch input of simultaneously dragging two fingers inward within the area where the control area 183 is displayed.

Accordingly, the controller 170 can display the image of the control area 183 in a reduced size so as not to waste the area of the transparent display 500 when the user does not want to control the electronic device recognized as an object.

Meanwhile, the objects controlled by the controller 170 based on touch input are not limited to electric curtains 600, door locks 710, and refrigerators 800, and may include all electronic devices that can be controlled by the display device 100 by receiving key information including a key code.

For example, if the controller 170 recognizes a refrigerator as an object, the controller may receive key information including a key code for changing the color of each door of the refrigerator from an external server (not shown) or memory 140. Then, the controller 170 may obtain an area corresponding to each door of the refrigerator as a control area for changing the color of each door. The controller 170 may transmit a signal to the refrigerator for changing the color of each door of the refrigerator based on a touch input for each control area.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A display device comprising:
a transparent display;
a camera; and
a controller that recognizes a preset object located at a rear surface of the transparent display using the camera, and, when the preset object is recognized, displays an image corresponding to the recognized object or controls the recognized object.

2. The display device of claim 1,
wherein the controller obtains an area corresponding to the recognized object from the transparent display and displays the image in the area corresponding to the recognized object.

3. The display device of claim 2,
wherein the controller obtains an area where the recognized object is visible on the transparent display as an area corresponding to the recognized object.

4. The display device of claim 2,
wherein the controller displays a weather-related image as an image corresponding to the recognized object in an area corresponding to the recognized object when the recognized object is a window.

5. The display device of claim 1,
wherein the controller displays a weather-related image as an image corresponding to the recognized object in an area corresponding to the recognized object in a remaining area other than an area corresponding to the recognized object when the recognized object is a window.

6. The display device of claim 1,
wherein the controller displays a preset landscape image as the image when the recognized object is a window.

7. The display device of claim 1,
wherein the controller obtains weather information from an external server when the recognized object is a window, and displays a first image, which is a preset landscape image, in an area corresponding to the recognized object, and a second image, which is a weather-related image corresponding to the weather information, in a remaining area other than the area corresponding to the recognized object.

8. The display device of claim 1,
wherein the controller displays an image including at least one person or animal as the image when the recognized object is a frame.

9. The display device of claim 1,
wherein the controller displays another object of the same type as the recognized object as the image when the recognized object is an object set to be invisible in a front surface of the transparent display or a user input is received to make the recognized object invisible in the front surface of the transparent display.

10. The display device of claim 1,
wherein the controller receives key information for controlling the recognized object from an external server, and controls the recognized object based on the received key information, or transmits the received key information to a remote control device.

11. The display device of claim 1,
wherein the controller obtains a control area of the transparent display for controlling the recognized object using the camera, and controls the recognized object based on a user input to the control area.

12. The display device of claim 11,
wherein the controller controls an electric curtain based on the drag direction of the user input to the control area when the recognized object is the electric curtain.

13. The display device of claim 1,
wherein the controller displays at least one icon for controlling the object recognized by the image.

14. The display device of claim 13,
wherein the controller displays at least one icon for controlling the recognized object as the image when the recognized object is at least one of a door lock, a refrigerator, and an air conditioner.

15. The display device of claim 1,
wherein the controller displays a guide to indicate that the recognized object can be controlled.
